# EUROPEAN PATENT SPECIFICATION

(11) **EP 3 296 603 B1**
(45) Date of publication and mention of the grant of the patent: **03.07.2019**
(21) Application number: 17189568.3
(22) Date of filing: 06.09.2017
(51) Int. Cl.: F16K 37/00, F16K 31/04, F16K 31/53, F01L 1/20

(54) **VALVE ATTACHMENT, VALVE AND METHOD FOR CONTROLLING A VALVE**
VENTILAUFSATZ, VENTIL UND VERFAHREN ZUR STEUERUNG EINES VENTILS
FIXATION DE SOUPAPE, SOUPAPE ET PROCÉDÉ DE COMMANDE D'UNE SOUPAPE

(30) Priority: 16.09.2016 DK 201600544
(43) Date of publication of application: 21.03.2018
(73) Proprietor: Danfoss A/S, 6430 Nordborg (DK)
(72) Inventor: Podrzaj, Gregor, 1315 Velike Lasce (SI); Saponia, Zoran, 1260 Ljubljana-Polje (SI)
(74) Representative: Keil & Schaafhausen Patent- und Rechtsanwälte PartGmbB

(56) References cited:
- WO-A1-2015/189263
- US-A- 5 832 955
- US-A1- 2009 082 944

## Description

The invention relates to a valve attachment comprising an actuator, a pin connected to the actuator and a control unit arranged to control the actuator, wherein the actuator is arranged to displace the pin, and wherein the valve attachment is structured and arranged to be attached to a valve housing such that a displacement of the pin also displaces a valve element arranged in the valve housing if the pin abuts a stem arranged in the valve housing, wherein the stem is connected to the valve element. The invention furthermore relates to a valve comprising such a valve attachment.

Valve attachments of the above kind are attached to valve housings to actuate the valve elements via an interaction of a pin of the valve attachment with a stem arranged in the valve housing. The pin can then push the stem against the force of a spring or the like to change the opening degree of the valve. However, there are normally open and normally closed valves, valves with a different stroke height as well as valves of numerous different manufacturers. However, one needs to ensure that a displacement of the pin will in any case result in a displacement of the stem. Otherwise a gap may form between the pin and the stem if the pin moves away from the stem too far. If, for example, the stem has reached its maximum stroke (e.g. a fully open or fully closed valve position) the pin of the valve attachment may in some cases still move further and decouple from the stem. During the next actuation of the pin this will then lead to an incorrect control of the valve by the valve attachment because the pin will only displace the stem once it again abuts the stem. While there are known solutions to this problem, they usually require a precise presetting of the valve attachment or the valve attachment needs to be chosen for the particular valve housing at hand. This leads to increased costs and results in a limited versatility of the known valve attachments.

A valve attachment as described at the outset is known from

US 5 832 955 A. This valve attachment is used in combination with a cylinder valve of an internal combustion engine and has the purpose to keep a predefined gap between the pin and a stem of the valve element.

WO 2015/189263 A1 describes a closure or air lock device for a vacuum chamber in which a closure cover is attracted by a magnet device to a counter plate. A distance between the closure cover and the counter plate is measured and the magnetic force of the magnet device is adjusted so that a predefined gap remains between the closure cover and the counter plate.

US 2009/0082944 A1 discloses a valve comprising an actuator, a pin connected to the actuator and a control unit arranged to control the actuator, wherein the actuator is arranged to displace the pin, and wherein the valve is structured and arranged such that a displacement of the pin also displaces a valve element arranged in a valve housing if the pin abuts a stem arranged in the valve housing, wherein the stem is connected to the valve element, wherein the valve comprises at least one reactance sensor to calculate a gap between the pin and the stem.

The task of the present invention is therefore to provide a valve attachment that ensures a precise control of the valve opening degree by preventing the occurrence of a gap between the pin and the stem.

According to the present invention the above task is solved in that the valve attachment comprises at least one reactance sensor to detect if a gap is present between the pin and the stem, wherein the control unit stops the actuator if at least one reactance sensor detects that a gap has appeared between the pin and the stem.

A reactance sensor measures a change in the reactance of one of the components of the valve and/or the valve attachment. Each one of the reactance sensors may either be a capacitive sensor detecting a change in capacity or an inductance sensor measuring the change in inductance in one of the components of the valve attachment or the valve. The advantage of a use of a reactance sensor is that the control unit may detect once the pin and the stem come into contact with each other or loose contact from one another. This way the control unit can prevent the occurrence of a gap between the pin and the stem by preventing that the pin is displaced further once the stem has reached its maximum stroke. Furthermore, the control unit will also be able to detect via the reactance sensor once the pin comes into contact with the stem, for example, when the valve attachment is first attached to the valve housing. When the control unit stops the actuator it is ensured that the pin will stop immediately and only a very small gap between the pin and the stem can form. Consequently, the next time the actuator is activated to move the pin towards the stem again the pin will not have to be displaced over more than a very small distance to abut the stem again. This way, one can ensure that the control of the opening position of the valve is more exact.

In an embodiment at least one reactance sensor is a capacitive sensor connected to the stem to detect a gap between the pin and the stem by measuring a change in a discharge time of a capacitor of the capacitive sensor. In this case the valve attachment comprises a capacitor that is, for example, electrically connected to the pin such that the effective capacity of the combined capacitor and pin changes once the pin abuts the stem. This can be measured by detecting a change in the discharge time of the capacitor. Alternatively, the capacitor can also be connected to the stem.

In an embodiment at least one reactance sensor is an inductance sensor, wherein the inductance sensor comprises at least one sensing coil to detect a gap between the pin and the stem by measuring a change in magnetic flux through the sensing coil. In this case the magnetic flux of the sensing coil will be affected if a gap forms between the pin and the stem or if a gap disappears between the pin and the stem. Consequently, the control unit can detect by a measurement of the magnetic flux if the pin abuts the stem or not. This embodiment also allows to measure the relative position of the pin and the stem.

In an embodiment at least one sensing coil is arranged coaxially around the stem. This can, for example, be achieved by using a cylindrical member of the valve attachment that can be placed coaxially around the stem at least partially when the valve attachment is attached to the valve housing. In this case the sensing coil will be part of the valve attachment and will be brought into vicinity of the stem when attaching the valve attachment to the valve housing.

In an embodiment at least one sensing coil is arranged coaxially around the pin. This way, the magnetic flux through the sensing coil will change when a gap forms between the pin and the stem or if the gap between the pin and the stem disappears once the pin abuts the stem. The sensing coil can be part of the pin or arranged in a member that is arranged coaxially around the pin.

In an embodiment at least one sensing coil is arranged at an axial end of the stem as a surface coil neighboring the pin.

In an embodiment at least one sensing coil is arranged at an axial end of the pin as a surface coil neighboring the stem.

In an embodiment the control unit stops the actuator by cutting the power supply to the actuator or by ignoring a control command to further actuate the actuator. Valve alternatives ensure that the occurrence of a large gap between the pin and the stem can be prevented and the pin will not be moved more than a very small distance away from the stem.

The above task is also solved by a valve comprising a valve attachment according to any of the above embodiments, a valve housing to which the valve attachment is attached, a valve element, a valve seat that is engageable by the valve element and a stem connected to the valve element. The stem connected to the valve element can be engaged by the pin, for example, by one axial end of the pin abutting an axial end of the stem. The valve housing may comprise one or more of the reactance sensors or parts of a reactance sensor. In case the valve comprises a reactance sensor with a sensing coil the sensing coil may be arranged coaxially around the stem. The sensing coil may also be arranged directly at the surface of the stem or even inside the stem. The signals of the corresponding reactance sensor may then be transferred to the control unit in the valve attachment via connectable data connectors arranged in both the valve attachment and the valve housing. The signals from the sensing coil may however also be transmitted wirelessly.

The above task is also solved by a method for controlling a valve according to any of the above embodiments, comprising the following steps:
- Bringing the pin and the stem into contact with each other,
- measuring and storing at least one reference value of a reactance with the at least one reactance sensor,
- measuring the reactance using the at least one reactance sensor while the pin is being displaced to change the valve opening degree,
- detecting if the measured value of the reactance differs from the at least one reference value and thereby
- determining if the pin and the stem abut each other or not,
- wherein the actuator is stopped once the occurrence of a gap between the pin and the stem is detected.

With this solution the valve is able to detect if the pin and the stem abut each other or not and thereby determine if the pin first has to be displaced towards the stem to bring them into contact before a change in opening degree of the valve can be performed. At the same time the valve is able to detect if during normal operation of the valve the pin moves out of contact of the stem which will lead to a change in the measured value of the reactance.

In an embodiment it is determined that the pin and the stem no longer abut each other only if the measured value of the reactance differs from the stored reference value by more than a predetermined threshold. This way one may ensure that fluctuation in the value of the reactance smaller than the threshold will not lead to a faulty determination that the pin and the stem no longer abut each other. Such fluctuations may for example caused by a change in temperature in the valve which may lead to a thermal elongation or shortening of valve components.

In an embodiment upon receiving a control signal for the valve, the control unit first displaces the pin via the actuator towards the stem until the currently measured and the reference value of the reactance are the same and then displaces the pin further according to the control signal to achieve the desired valve opening position. This way it is ensured that the valve will be opened to the desired valve opening position even if a gap is present between the pin and the stem upon activating the actuator.

Embodiments of the invention will now be described with reference to the figures, wherein:
- Fig. 1: shows a simplified embodiment of a valve according to the invention,
- Fig. 2: shows a first embodiment of the invention,
- Fig. 3: shows a second embodiment of the invention,
- Fig. 4: shows a third embodiment of the invention,
- Fig. 5: shows a fourth embodiment of the invention,
- Fig. 6: shows a fifth embodiment of the invention,
- Fig. 7: shows a sixth embodiment of the invention,
- Fig. 8: shows a flow diagram of the method according to the invention.

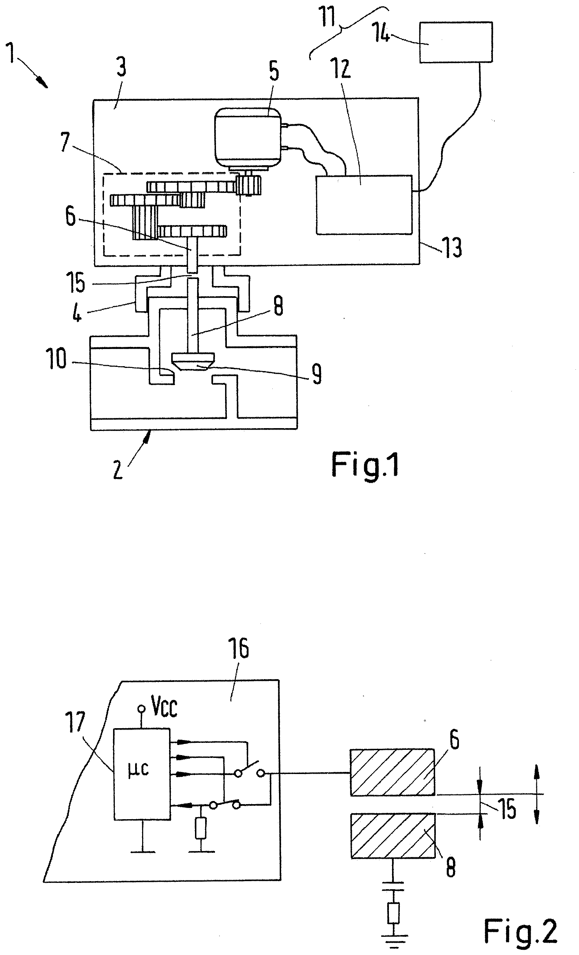

In Fig. 1 a simplified depiction of a valve 1 according to the invention is shown. Fig. 2 to 7 show six embodiments which differ in the used sensor.

Fig. 1 shows a valve 1 comprising a valve housing 2 as well as a valve attachment 3. The valve attachment 3 is attached to the valve housing 2 via a connection geometry 4. The valve attachment 3 comprises an actuator 5, 7 with a motor 5 which is structured and arranged to displace a pin 6 in the given example via mechanical components 7. The actuator 5, 7 comprises the motor 5 and the mechanical components 7.

If the pin 6 abuts a stem 8 a displacement of the pin 6 also displaces a valve element 9 arranged in the valve housing 2.

The shown embodiment of the valve 1 is a normally open valve but a normally closed valve may also be used. A spring providing a force towards an open valve position is omitted for simplicity. When the valve 1 is closed the valve element 9 engages a valve seat 10 arranged in the valve housing 2.

The actuator 5, 7 is provided with a current for actuating the pin 6 via a control unit 11. The control unit 11 in the given embodiment comprises electronics 12 arranged in a casing 13 of the valve attachment 3 as well as a controller 14 arranged outside the casing 13. However, the control unit 11 can also be arranged completely inside the casing 13 or completely outside the casing 13.

The invention solves the following problem. The pin 6 and the stem 8 can become decoupled during normal operation in valves known in the state of the art. This may, for example, happen in normally open valves when the valve element 9 reaches its completely open position but the actuator 5 is still able to move the pin 6 further towards a more open valve position. In this case the pin 6 will decouple from the stem 8 and move away from the stem 8. In this case a gap occurs which results in an incorrect control of the valve the next time the actuator is activated to move the valve element 9 towards a more closed valve position.

Furthermore, a gap may occur in normally closed valves when the valve has reached its fully closed valve position and the pin 6 can still be moved further away towards a more closed valve position causing a decoupling of the stem 8 and the pin 6. In this case a gap will also occur. The next time the actuator is activated to again open the valve the actuator will then first move the pin towards the stem 8 without achieving a change in the opening position of the valve.

To overcome this problem the valve attachment according to the present invention comprises at least one reactance sensor to detect if a gap is present between the pin 6 and the stem 9. Different embodiments of a valve attachment 3 and a valve 1 according to the invention using at least one reactance sensor will now be described in the following.

Fig. 2 shows a first embodiment comprising a reactance sensor, in this case a capacitive sensor 16. The capacitive sensor 16 is connected to the pin 6 via parallel switches. In case the pin 6 abuts the stem 8 a change in the discharge time of a capacitor 17 of the capacitive sensor 16 can be measured.

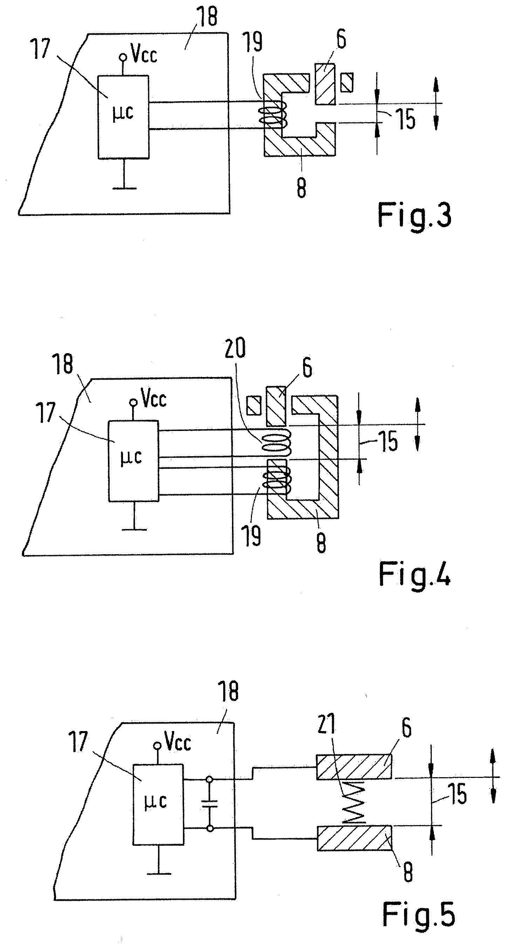

Fig. 3 shows a second embodiment of the invention. Therein the reactance sensor is an inductance sensor 18 comprising a sensing coil 19. If a gap appears between the stem 8 and the pin 6 the magnetic flux through the sensing coil 19 is influenced which can be measured by the inductance sensor 18. Furthermore, this embodiment also allows to detect the position of the stem 8.

Fig. 4 shows a third embodiment of the invention. The inductance sensor 18 here comprises two sensing coils 19, 20. The sensing coil 19 is arranged coaxially around the stem 8 while the sensing coil 20 is arranged coaxially around the pin 6. Thereby, both the position of the stem 8 as well as the position of the pin 6 can be measured in addition to the size of the gap.

Fig. 5 shows a fourth embodiment of the invention comprising an inductance sensor 20. The inductance sensor 18 here comprises a sensing coil 21 in the form of a coil spring arranged between axial end faces of the pin 6 and the stem 8. In this embodiment it is also possible to detect the relative position of the pin 6 and the stem 8 by measuring a change in the magnetic flux through the sensing coil 21.

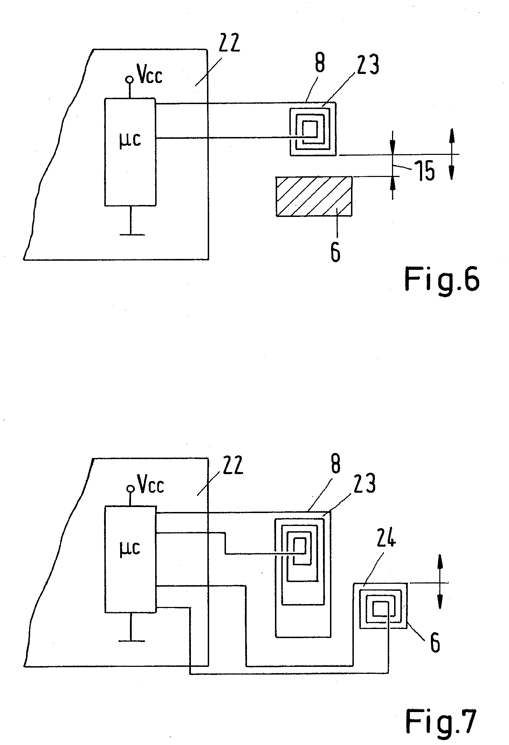

Fig. 6 and 7 show the fifth and sixth embodiment according to the invention comprising in each case an inductance sensor 22. In case of the embodiment of Fig. 6 the inductance sensor 22 comprises a sensing coil 23 in the form of a surface coil arranged at a surface of the stem 8. Preferably, the surface coil will be arranged at an axial end of the stem 8 facing the pin 6. Depending on the occurrence and the size of a gap between the stem 8 and the pin 6 a change in magnetic flux in the sensing coil 23 can be detected by the inductance sensor 22.

In the sixth embodiment according to Fig. 7 a similar inductance sensor 22 to the previous embodiment is used. The inductance sensor 22 here comprises a sensing coil 23 in the form of a surface coil arranged at a surface of the stem 8 as well as a sensing coil 24 in the form of a surface coil arranged at a surface of the pin 6. Preferably, the sensing coils 23, 24 are arranged on surfaces of the pin 6 and the stem 8 facing each other. By measuring the changes in the magnetic flux through the sensing coils 23, 24 both the occurrence of the gap 15 as well as the relative position of the pin 6 and the stem 8 can be measured by the inductance sensor 22.

In the embodiments according to Fig. 3, 4, 5 and 7 a reactance sensor 16, 18, 22 or parts of it may be arranged at or in the valve housing 2. The signals from the reactance sensor 16, 18, 22 may be transferred to the control unit 11 via connectable data connectors arranged in both the valve attachment 3 and the valve housing 2. The signals may alternatively be transmitted wirelessly.

In the embodiments comprising at least one sensing coil 19, 20, 21, 23, 24 the reactance sensor 16, 18, 22 may comprise a flexible electric connection between the sensing coil 19, 20, 21, 23, 24 and the remainder of the reactance sensor 16, 18, 22.

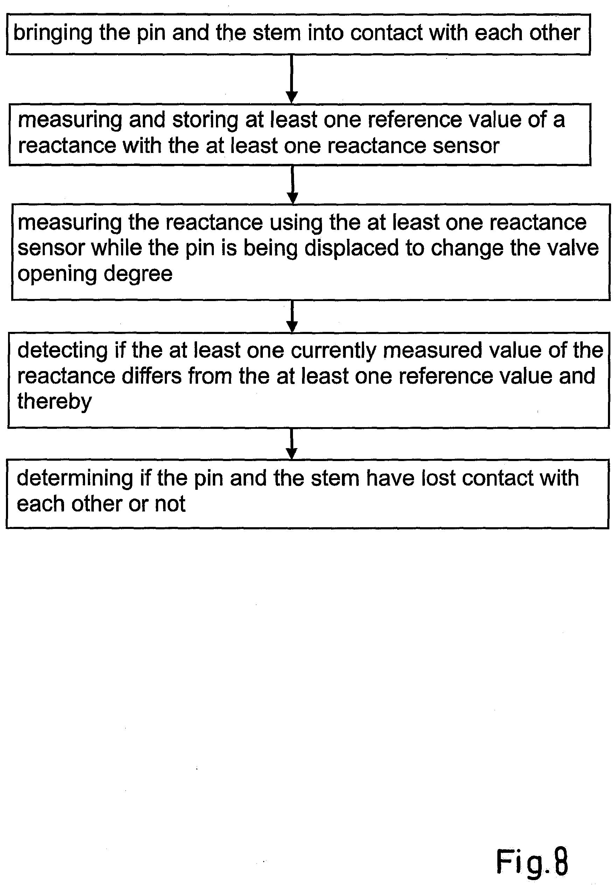

Fig. 8 shows a flow chart of the control method according to the invention. According to the control method the pin 6 and the stem 8 are first brought into contact with each other. This may, for example, be performed by simply moving the pin 6 to the maximum stroke distance towards the stem 8. In this position at least one reference value of a reactance is measured and stored with the at least one reactance sensor 16, 18, 22. Thereby, a reference value of the reactance is defined for which the pin 6 and the stem 8 abut each other. When the pin 6 is then being displaced during normal operation of the valve 1 the reactance is measured constantly or in intervals using the at least one reactance sensor 16, 18, 22. Thereby, one may detect if the value of the measured reactance changes and differs from the at least reference value. This allows to determine if the pin 6 and the stem 8 abut each other or not.

In an embodiment it may only be determined that the pin 6 and the stem 8 no longer abut each other if the measured value of the reactance differs from the stored value of the reactance by more than a predetermined threshold. The threshold can be a fixed percentage of the stored reference value.

The actuator may be stopped once the occurrence of a gap 15 between the pin 6 and the stem 8 is detected.

Upon receiving a control signal for the valve the control unit may first displace the pin 6 via the actuator 5, 7 towards the stem 8 until the currently measured and the reference value of the reactance are the same. The same here again may mean that they coincide within a predetermined threshold. Once it is detected that the currently measured value of the reactance and the reference value are the same the pin 6 may then be displaced further according to the control signal to achieve the desired valve opening position.

## Claims

1. Valve attachment (3) comprising an actuator (5), a pin (6) connected to the actuator (5) and a control unit (11) arranged to control the actuator (5, 7), wherein the actuator (5, 7) is arranged to displace the pin (6), and wherein the valve attachment (3) is structured and arranged to be attached to a valve housing (2) such that a displacement of the pin (6) also displaces a valve element (9) arranged in the valve housing (2) if the pin (6) abuts a stem (8) arranged in the valve housing (2), wherein the stem (8) is connected to the valve element (9), wherein the valve attachment (3) comprises at least one reactance sensor (16, 18, 22) to detect if a gap (15) is present between the pin (6) and the stem (8), wherein the control unit (11) stops the actuator (5, 7) if the at least one reactance sensor (16, 18, 22) detects that a gap (15) has appeared between the pin (6) and the stem (8).

2. Valve attachment (3) according to claim 1, **characterized in that** at least one reactance sensor (16, 18, 22) is a capacitive sensor (16) connected to the pin (6) to attack a gap (15) between the pin (6) and the stem (8) by measuring a change in the discharge time of a capacitor (17) of the capacitive sensor (16).

3. Valve attachment (3) according to claim 1 or 2, **characterized in that** at least one reactance sensor (16, 18, 22) is an inductance sensor (18, 22), wherein the inductance sensor (18, 20, 22) comprises at least one sensing coil (19, 20, 21, 23, 24) to detect a gap (15) between the pin (6) and the stem (8) by measuring a change in the magnetic flux through the sensing coil (19, 20, 21, 23, 24).

4. Valve attachment (3) according to claim 3, **characterized in that** at least one sensing coil (19) is arranged coaxially around the stem (8).

5. Valve attachment (3) according to claim 3 or 4, **characterized in that** at least one sensing coil (20) is arranged coaxially around the pin (6).

6. Valve attachment (3) according to any of claims 3 to 5, **characterized in that** at least one sensing coil (23) is arranged at an axial end of the stem (8) as a surface coil neighboring the pin (6).

7. Valve attachment (3) according to any of claims 3 to 6, **characterized in that** at least one sensing coil (24) is arranged at an axial end of the pin (6) as a surface coil neighboring the stem (8).

8. Valve attachment (3) according to any of claims 1 to 7, **characterized in that** the control unit (11) stops the actuator (5, 7) by cutting the power supply to the actuator (5, 7) or by ignoring a control command to further activate the actuator (5, 7).

9. Valve (1) comprising a valve attachment (3) according to any of the preceding claims, a valve housing (2) to which the valve attachment (3) is attached, a valve element (9), a valve seat (10) that is engageable by the valve element (9) and a stem (8) connected to the valve element (9).

10. Method for controlling a valve (1) according to claim 9, comprising the following steps:
- Bringing the pin (6) and the stem (8) into contact with each other,
- measuring and storing at least one reference value of a reactance with the at least one reactance sensor (16, 18, 22),
- measuring the reactance using the at least one reactance sensor (16, 18, 22) while the pin (6) is being displaced to change the valve opening degree,
- detecting if the measured value of the reactance differs from the at least one reference value and thereby
- determining if the pin (6) and the stem (8) abut each other or not,
- wherein the actuator (5, 7) is stopped once the occurrence of a gap (15) between the pin (6) and the stem (8) is detected.

11. Method according to claim 10, **characterized in that** it is determined that the pin (6) and the stem (8) no longer abut each other only if the measured value of the reactance differs from the stored reference value by more than a predetermined threshold.

12. Method according to any of claims 10 to 11, **characterized in that** upon receiving a control signal for the valve (1), the control unit (11) first displaces the pin (6) via the actuator (5, 7) towards the stem (8) until the currently measured and the reference value of the reactance are the same and then displaces the pin (6) further according to the control signal to achieve the desired valve opening position.

## Patentansprüche

1. Ventilaufsatz (3), umfassend: ein Stellglied (5), einen mit dem Stellglied (5) verbundenen Stift (6) sowie eine Steuereinheit (11) zur Steuerung des Stellglieds (5, 7), wobei das Stellglied (5, 7) angeordnet ist, um den Stift (6) zu verstellen, und wobei der Ventilaufsatz (3) strukturiert und angeordnet ist, um so an einem Ventilgehäuse (2) befestigt zu werden, dass ein Verstellen des Stifts (6) auch ein im Ventilgehäuse (2) angeordnetes Ventilelement (9) verstellt, wenn der Stift (6) an einem im Ventilgehäuse (2) angeordneten Schaft (8) anliegt, wobei der Schaft (8) mit dem Ventilelement (9) verbunden ist, wobei der Ventilaufsatz (3) mindestens einen Reaktanzsensor (16, 18, 22) umfasst, um zu ermitteln, ob ein Spalt (15) zwischen dem Stift (6) und dem Schaft (8) vorhanden ist, und wobei die Steuereinheit (11) das Stellglied (5, 7) stoppt, wenn der mindestens eine Reaktanzsensor (16, 18, 22) ermittelt, dass zwischen dem Stift (6) und dem Schaft (8) ein Spalt (15) aufgetreten ist.

2. Ventilaufsatz (3) nach Anspruch 1, **dadurch gekennzeichnet, dass** mindestens ein Reaktanzsensor (16, 18, 22) ein kapazitiver Sensor (16) ist, der mit dem Stift (6) verbunden ist, um einem Spalt (15) zwischen dem Stift (6) und dem Schaft (8) durch Messen einer Veränderung der Entladezeit eines Kondensators (17) des kapazitiven Sensors (16) entgegenzuwirken.

3. Ventilaufsatz (3) nach Anspruch 1 oder 2, **dadurch gekennzeichnet, dass** mindestens ein Reaktanzsensor (16, 18, 22) ein induktiver Sensor (18, 22) ist, wobei der induktive Sensor (18, 20, 22) mindestens eine Sensorspule (19, 20, 21, 23, 24) umfasst, um einen Spalt (15) zwischen dem Stift (6) und dem Schaft (8) durch Messen einer Veränderung des Magnetflusses durch die Sensorspule (19, 20, 21, 23, 24) zu ermitteln.

4. Ventilaufsatz (3) nach Anspruch 3, **dadurch gekennzeichnet, dass** mindestens eine Sensorspule (19) koaxial um den Schaft (8) herum angeordnet ist.

5. Ventilaufsatz (3) nach Anspruch 3 oder 4, **dadurch gekennzeichnet, dass** mindestens eine Sensorspule (20) koaxial um den Stift (6) herum angeordnet ist.

6. Ventilaufsatz (3) nach einem der Ansprüche 3 bis 5, **dadurch gekennzeichnet, dass** mindestens eine Sensorspule (23) an einem axialen Ende des Schafts (8) als eine an den Stift (6) angrenzende Oberflächenspule angeordnet ist.

7. Ventilaufsatz (3) nach einem der Ansprüche 3 bis 6, **dadurch gekennzeichnet, dass** mindestens eine Sensorspule (24) an einem axialen Ende des Stifts (6) als eine an den Schaft (8) angrenzende Oberflächenspule angeordnet ist.

8. Ventilaufsatz (3) nach einem der Ansprüche 1 bis 7, **dadurch gekennzeichnet, dass** die Steuereinheit (11) das Stellglied (5, 7) stoppt, indem sie die Stromversorgung zum Stellglied (5, 7) unterbricht oder einen Steuerbefehl ignoriert, um das Stellglied (5, 7) weiter zu aktivieren.

9. Ventil (1), umfassend: einen Ventilaufsatz (3) nach einem der vorstehend aufgeführten Ansprüche, ein Ventilgehäuse (2), an dem der Ventilaufsatz (3) befestigt ist, ein Ventilelement (9), einen Ventilsitz (10), in den das Ventilelement (9) eingreifen kann, und einen mit dem Ventilelement (9) verbundenen Schaft (8).

10. Verfahren zur Steuerung eines Ventils (1) nach Anspruch 9, das die folgenden Schritte umfasst:
- Inkontaktbringen des Stifts (6) mit dem Schaft (8),
- Messen und Speichern von mindestens einem Bezugswert einer Reaktanz mit dem mindestens einen Reaktanzsensor (16, 18, 22),
- Messen der Reaktanz durch Nutzung des mindestens einen Reaktanzsensors (16, 18, 22), während der Stift (6) verstellt wird, um den Grad der Ventilöffnung zu verändern,
- Ermitteln, ob der gemessene Wert der Reaktanz von dem mindestens einen Bezugswert abweicht und dadurch
- Ermitteln, ob der Stift (6) und der Schaft (8) aneinander angrenzen oder nicht,
- Wobei das Stellglied (5, 7) gestoppt wird, sobald das Auftreten eines Spalts (15) zwischen dem Stift (6) und dem Schaft (8) ermittelt wird.

11. Verfahren nach Anspruch 10, **dadurch gekennzeichnet, dass** ermittelt wird, dass der Stift (6) und der Schaft (8) nur dann nicht mehr aneinander angrenzen, wenn der gemessene Wert der Reaktanz um mehr als einen vorbestimmten Schwellenwert vom gespeicherten Bezugswert abweicht.

12. Verfahren nach einem der Ansprüche 10 bis 11, **dadurch gekennzeichnet, dass** die Steuereinheit (11), bei Erhalt eines Steuersignals für das Ventil (1), den Stift (6) zunächst über das Stellglied (5, 7) hin zum Schaft (8) verstellt, bis der aktuell gemessene Wert und der Bezugswert der Reaktanz identisch sind, und dann den Stift (6) weiterhin gemäß dem Steuersignal verstellt, um die gewünschte Ventilöffnungsposition zu erzielen.

## Revendications

1. Fixation de soupape (3) comprenant un actionneur (5), un axe (6) rattaché à l'actionneur (5) et une unité de commande (11) agencée de façon à commander l'actionneur (5, 7), l'actionneur (5, 7) étant agencé de façon à déplacer l'axe (6), et la fixation de soupape (3) étant structurée et agencée de façon à être attachée à un boîtier de soupape (2) de manière à ce qu'un déplacement de l'axe (6) déplace aussi un élément de soupape (9) disposé dans le boîtier de soupape (2) si l'axe (6) bute contre une tige (8) disposée dans le boîtier de soupape (2), cette tige (8) étant rattachée à l'élément de soupape (9), la fixation de soupape (3) comprenant au moins un capteur de réactance (16, 18, 22) pour détecter si un espace (15) est présent entre l'axe (6) et la tige (8), l'unité de commande (11) arrêtant l'actionneur (5, 7) si l'au moins un capteur de réactance (16, 18, 22) détecte qu'un espace (5) est apparu entre l'axe (6) et la tige (8).

2. Fixation de soupape (3) selon la revendication 1, **caractérisée en ce qu'**au moins un capteur de réactance (16, 18, 22) est un capteur capacitif (16) rattaché à l'axe (6) pour attaquer un espace (15) entre l'axe (6) et la tige (8) en mesurant un changement dans le temps de décharge d'un condensateur (17) du capteur capacitif (16).

3. Fixation de soupape (3) selon la revendication 1 ou 2, **caractérisée en ce qu'**au moins un capteur de réactance (16, 18, 22) est un capteur d'inductance (18, 22), ce capteur d'inductance (18, 20, 22) comprenant au moins une bobine de détection (19, 20, 21, 23, 24) pour détecter un espace (15) entre l'axe (6) et la tige (8) en mesurant un changement dans le flux magnétique à travers la bobine de détection (19, 20, 21, 23, 24).

4. Fixation de soupape (3) selon la revendication 3, **caractérisée en ce qu'**au moins une bobine de détection (19) est disposée de manière coaxiale autour de la tige (8).

5. Fixation de soupape (3) selon la revendication 3 ou 4, **caractérisée en ce qu'**au moins une bobine de détection (20) est disposée de manière coaxiale autour de l'axe (6).

6. Fixation de soupape (3) selon l'une quelconque des revendications 3 à 5, **caractérisée en ce qu'**au moins une bobine de détection (23) est disposée à une extrémité axiale de la tige (8) comme une bobine de surface voisine de l'axe (6).

7. Fixation de soupape (3) selon l'une quelconque des revendications 3 à 6, **caractérisée en ce qu'**au moins une bobine de détection (24) est disposée à une extrémité axiale de l'axe (6) comme une bobine de surface voisine de de la tige (8).

8. Fixation de soupape (3) selon l'une quelconque des revendications 1 à 7, **caractérisée en ce que** l'unité de commande (11) arrête l'actionneur (5, 7) en coupant l'alimentation électrique de l'actionneur (5, 7) ou en ignorant une instruction de commande pour activer encore l'actionneur (5, 7) .

9. Soupape (1) comprenant une fixation de soupape (3) selon l'une quelconque des revendications précédentes, un boîtier de soupape (2) auquel est attachée la fixation de soupape (3), un élément de soupape (9), un siège de soupape (10) qui peut être engagé par l'élément de soupape (9) et une tige (8) rattachée à l'élément de soupape (9).

10. Procédé pour commander une soupape (1) selon la revendication 9, comprenant les étapes suivantes :
- la mise en contact de l'axe (6) et de la tige l'une avec l'autre,
- la mesure et le stockage d'au moins une valeur de référence d'une réactance avec l'au moins un capteur de réactance (16, 18, 22),
- la mesure de cette réactance en utilisant l'au moins un capteur de réactance (16, 18, 22) tandis que l'axe (6) est en train d'être déplacé pour changer le degré d'ouverture de la soupape,
- la détection de si la valeur mesurée de la réactance diffère de l'au moins une valeur de référence et ainsi
- la détermination de si l'axe (6) et la tige (8) butent l'une contre l'autre ou pas,
l'actionneur (5, 7) étant arrêté une fois que l'existence d'un espace (15) entre l'axe (6) et la tige (8) est détecté.

11. Procédé selon la revendication 10, **caractérisé en ce qu'**il est déterminé que l'axe (6) et la tige (8) ne butent plus l'une contre l'autre seulement si la valeur mesurée de la réactance diffère de la valeur de référence stockée de plus qu'un seuil prédéterminé.

12. Procédé selon l'une quelconque des revendications 10 à 11, **caractérisé en ce que**, lors de la réception d'un signal de commande pour la soupape (1), l'unité de commande (11) déplace tout d'abord l'axe (6) via l'actionneur (5, 7) vers la tige (8) jusqu'à ce que la valeur actuellement mesurée et la valeur de référence de la réactance soient les mêmes, puis elle déplace encore l'axe (6) conformément au signal de commande pour obtenir la position d'ouverture désirée de la soupape.
